# EUROPÄISCHE PATENTSCHRIFT

(11) **EP 1 344 393 B1**
(45) Veröffentlichungstag und Bekanntmachung des Hinweises auf die Patenterteilung: **29.09.2004**
(21) Anmeldenummer: 01991867.1
(22) Anmeldetag: 18.12.2001
(51) Int. Cl.: H04N 3/15

(54) **BILDSENSOREINRICHTUNG MIT ÜBERLAUFSCHUTZ**
IMAGE SENSOR DEVICE COMPRISING PROTECTION AGAINST OVERFLOW
DISPOSITIF DE DETECTION D'IMAGE A PROTECTION CONTRE LE DEPASSEMENT

(30) Priorität: 21.12.2000 DE 10063839
(43) Veröffentlichungstag der Anmeldung: 17.09.2003
(73) Patentinhaber: STMicroelectronics N.V., 1118 BH Schiphol Airport Amsterdam (NL)
(72) Erfinder: BENTHIEN, Stephan, F-38420 Domene (FR)
(74) Vertreter: Adler, Peter, Dipl.-Ing.
(86) Internationale Anmeldenummer: PCT/EP2001/014999
(87) Internationale Veröffentlichungsnummer: WO 2002/051129

(56) Entgegenhaltungen:
- EP-A- 0 863 663

## Beschreibung

Die Erfindung betrifft eine Bildsensoreinrichtung, bestehend aus einem insbesondere in CMOS-Technologie ausgebildeten Substrat mit einer integrierten Halbleiterstruktur (ASIC) und einer darüber angeordneten in TFA-Technologie hergestellten optisch aktiven Dünnschichtstruktur, bestehend jeweils aus mindestens einer Schicht aus dotiertem amorphen Silizium und mindestens einer Schicht aus undotiertem amorphen Silizium, wobei in der Horizontalebene der Bildsensoreinrichtung jeweils räumlich benachbarte Bildelemente (Pixel) ausgebildet sind, die jeweils einen optoelektronischen Wandler (DETEKTOR) zum Umwandeln von einfallendem Licht in eine der einfallenden Lichtmenge proportionales elektrisches Signal, insbesondere einen elektrischen Strom, sowie einen dem optoelektronischen Wandler (DETEKTOR) zugeordneten Ladungsspeicher aufweisen, dessen Ladungszustand in Abhängigkeit von dem auf den zugeordneten optoelektronischen Wandler (DETEKTOR) einfallenden Licht variierbar ist, wobei dem Ladungsspeicher erste und zweite Begrenzungsmittel zur Definition jeweils eines oberen und eines unteren Ladungsgrenzwertes zugeordnet sind.

Eine Bildsensoreinrichtung der genannten Art ist aus der Praxis bekannt. Ein solcher Bildsensor besteht aus einem üblicherweise in CMOS-Technologie hergestellten Substrat mit halbleitenden Eigenschaften und einer darauf abgeschiedenen Struktur von optisch aktiven Schichten. Diese Technologie wird auch als Thin Film on ASIC (TFA-Technologie) bezeichnet. Bei Bildsensoren dieser Art befinden sich die optisch aktiven Schichten auf der Oberseite der ASIC-Substratstruktur, und es sind dort horizontal benachbart jeweils einzelne Bildelemente, Pixel, ausgebildet. In jedem einzelnen Pixel befinden sich sowohl ein optoelektronischer Wandler in Form einer Fotodiode, in der das einfallende Licht in ein der einfallenden Lichtmenge proportionales elektrisches Signal, insbesondere einen elektrischen Strom, umgewandelt wird. Die Erfassung der Lichtmenge erfolgt über einen dem optoelektrischen Wandler zugeordneten Ladungsspeicher, dessen Ladungszustand ein Maß für die innerhalb einer bestimmten Zeitdauer eingefallenen Lichtmenge ist.

Nach Ablauf der Messzeit, der sogenannten Integrationsdauer, wird der im Ladungsspeicher vorhandene Messwert aus dem einzelnen Pixel von einer Peripherieelektronik gesteuert, ausgelesen und weiter verarbeitet.

Eine Eigenschaft solcher bekannter Bildsensoren besteht darin, dass die Verwendung von Fotodioden als optoelektronische wandler des optischen Sensors folgende nachteilige Wirkung hat:

Wenn die üblicherweise im Sperrzustand betriebene Fotodiode in den Leerlauf oder in den leitenden Zustand übergeht, verliert die Fotodiode ihre gewünschte Wirkung und es erfolgt eine Interaktion mit den Fotodioden der benachbarten Pixel, so dass hierdurch eine Bildverfälschung eintritt. Dies führt im Bereich des gestörten Pixels zu einem weißen Fleck auf dem Bildsensor. Dieser Effekt wird als sogenanntes "Blooming" bezeichnet.

Aus der EP-A-0 863 663 geht ein Ansteuerverfahren für einen Festkörper-Bildsensor mit einer Struktur zur Vermeidung des "Blooming" hervor. Dieser Bildsensor weist einzelne Pixel auf, die jeweils einen optoelektronischen Wandler mit einem zugehörigen Ladungsspeicher aufweisen. Der optoelektronische Wandler ist hier als n-Kanal-MOS-Transistor ausgeführt, dessen Source als Photodiode und gleichzeitig als Ladungsspeicher verwendet wird. Der Ladungszustand der Source hängt dabei von dem auf den zugehörigen optoelektronischen Wandler einfallenden Licht ab. Zur Vermeidung des "Blooming"-Effektes wird die maximal gespeicherte Ladung durch eine am Gate des MOS-Transistors angelegte Spannung während der Integrationszeit gesteuert. Überschüssige Ladung, die den Maximalwert übersteigt und damit das "Blooming" bewirken würde, wird durch Aktivierung des Reset Gates über das Drain des optoelektronischen Wandlers abgeleitet.

Eine derartige Verfahrensweise zur Vermeidung des "Blooming" lässt sich allerdings nicht auf Bildsensoren in TFA-Technologie übertragen, bei der Fotodioden als optoelektronische Wandler verwendet werden, deren Fotostrom auf einem parallel geschalteten Kondensator während der Integrationszeit eine entsprechende Ladung erzeugt.

In den WO 00 05874 A und der WO 99 66709 A werden Bildsensoren beschrieben, bei denen als optoelektronischer Wandler Fotodioden und als Ladungsspeicher ein Kondensatoren verwendet wird. Möglichkeiten zur Vermeidung des "Blooming" infolge einer möglichen Interaktion mit den Fotodioden benachbarter Pixel werden hier allerdings nicht aufgezeigt.

Davon ausgehend liegt der Erfindung die Aufgabe zugrunde, eine Bildverfälschung im einzelnen Pixel infolge eines Übergangs des optoelektronischen Wandlers aus dem Sperrzustand zu vermeiden.

Diese Aufgabe wird erfindungsgemäß bei einer Bildsensoreinrichtung der eingangs genannten Art durch die kennzeichnenden Merkmale des Patentanspruches 1 gelöst.

Die Erfindung zeichnet sich dadurch aus, dass einerseits durch die Festlegung des oberen Grenzwertes für den Ladungsspeicher ein Anfangszustand für die Integration des pixelbezogenen Messwertes definiert wird und dass andererseits durch die Festlegung des unteren Grenzwertes der Ladungsspeicher stets über ein minimales Restpotential verfügt, das verhindert, dass der optoelektronische Wandler (d.h. die Fotodiode) in den Leerlauf oder den leitenden Zustand übergeht. Die hierzu am Ladungsspeicher angelegte Spannung ist mindestens so hoch, dass der Halbleiterschalter bereits in den leitenden Zustand übergeht, bevor am Ladungsspeicher die Spannung 0 Volt erreicht wird. Hierdurch wird sichergestellt, dass die Spannung über dem Ladungsspeicher und damit die Spannung über dem Detektor nicht unter einen bestimmten wert sinken kann. Hierdurch kann der Detektor nicht mehr in den Leerlauf oder den leitenden Zustand kommen, so dass der nachteilige "Blooming"-Effekt verhindert wird. Bevorzugte Ausführungsformen sind den abhängigen Ansprüchen zu entnehmen.

Die Erfindung wird im folgenden anhand eines Ausführungsbeispiels (Figur) näher erläutert:

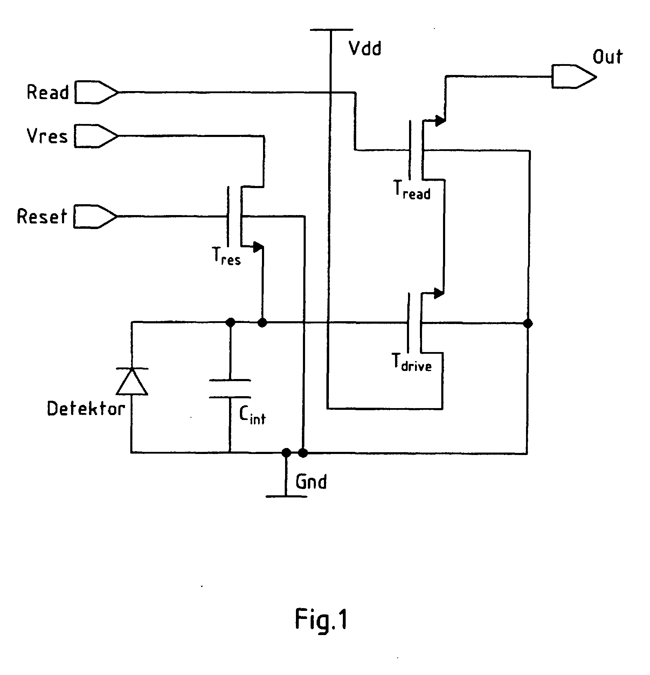

Der in der Figur dargestellte elektronische Schaltkreis bezieht sich auf ein einzelnes Bildelement und besteht aus einem als Detektor ausgeführten optoelektronischen Wandler, dem ein Ladungsspeicher in Form eines Kondensators Cᵢₙₜ parallel geschaltet ist. Einer der gemeinsamen Anschlüsse ist mit dem Erdpotential G_{nd} verbunden, und der andere gemeinsame Anschluss von Detektor und Kondensator ist mit dem Kollektoranschluss eines Halbleiterschalters Tᵣₑₛ verbunden, dessen Emitteranschluss mit einer festen Bezugsspannung Vᵣₑₛ und dessen Basisanschluss mit einem Basiseingang RESET verbunden ist. Die übrigen, in der Schaltung dargestellten Elemente betreffen den Auslesevorgang des im Ladungsspeicher abgespeicherten Messwertes und sind für das Verständnis der vorliegenden Erfindung nicht von Bedeutung.

Zu Beginn des Messvorgangs wird an dem RESET-Eingang des Halbleiterschalters eine hinreichend hohe erste Spannung angelegt, welche bewirkt, dass der Halbleiterschalter leitend wird. Hierdurch wird die Spannung Vᵣₑₛ an den nicht auf Erdpotential liegenden Anschluss von Detektor bzw. Kondensator Cᵢₙₜ angelegt. Diese Spannung definiert den oberen Ladungszustand des Kondensators Cᵢₙₜ. Am Detektor liegt somit die Spannung Vᵣₑₛ als Sperrspannung an.

Anschließend wird die Basisspannung des Halbleiterschalters auf einen Wert reduziert, welcher einerseits noch wenig oberhalb der Sperrspannung des Halbleiterschalters liegt, aber andererseits so niedrig ist, dass der Halbleiterschalter vom leitenden in den nichtleitenden Zustand übergeht. In der sich anschließenden Betriebsphase des optischen Sensors wird die Kapazität Cᵢₙₜ durch den Detektorstrom des optoelektronischen Wandlers entladen, und zwar bis die Spannung im Kondensator auf einen Wert von wenig über 0 Volt abgefallen ist. Bevor jedoch die Spannung 0 Volt am oberen Anschluss des Kondensators Cᵢₙₜ erreicht ist, geht der Halbleiterschalter wiederum in den leitenden Zustand über, da die am Steuereingang anliegende Spannung größer ist als die reine Sperrspannung. Hierdurch ist sichergestellt, dass am Detektor stets eine Sperrspannung minimaler Größe anliegt, so dass dieser nicht in den Leerlauf oder den leitenden Zustand kommen kann.

## Patentansprüche

1. Bildsensoreinrichtung, bestehend aus einem insbesondere in CMOS-Technologie ausgebildeten Substrat mit einer integrierten Halbleiterstruktur und einer darüber angeordneten in TFA-Technologie hergestellten optisch aktiven Dünnschichtstruktur, bestehend jeweils aus mindestens einer Schicht aus dotiertem amorphen Silizium und mindestens einer Schicht aus undotiertem amorphen Silizium, wobei in der Horizontalebene der Bildsensoreinrichtung jeweils räumlich benachbarte Bildelemente ausgebildet sind, die jeweils einen optoelektronischen Wandler zum Umwandeln von einfallendem Licht in eine der einfallenden Lichtmenge proportionales elektrisches Signal, insbesondere einen elektrischen Strom, sowie einen dem optoelektronischen Wandler zugeordneten Ladungsspeicher aufweisen, dessen Ladungszustand in Abhängigkeit von dem auf den zugeordneten optoelektronischen Wandler einfallenden Licht variierbar ist, wobei dem Ladungsspeicher erste und zweite Begrenzungsmittel zur Definition jeweils eines oberen und eines unteren Ladungsgrenzwertes zugeordnet sind, **dadurch gekennzeichnet, dass** das erste Begrenzungsmittel ein Resetmittel (RESET) ist, durch welches zur Definition des oberen Ladungsbegrenzungswertes eine vorgebbare elektrische Spannung (Vᵣₑₛ) an den Ladungsspeicher in Form eines Kondensators (Cᵢₙₜ) anlegbar ist und dass das zweite Begrenzungsmittel ein Halbleiterschalter (Tᵣₑₛ) ist, dessen Steueranschluss auf einem Potential derart wenig oberhalb der Sperrspannung gehalten wird, dass der Halbleiterschalter (Tᵣₑₛ) in den leitenden Zustand übergeht, bevor die Spannung am Kondensator (Cᵢₙₜ) einen kritischen Wert von 0 Volt erreicht.

2. Bildsensoreinrichtung nach Anspruch 1, **dadurch gekennzeichnet, dass** die Bildsensoreinrichtung eine Zeile von einzelnen Bildelementen aufweist.

3. Bildsensoreinrichtung nach Anspruch 1, **dadurch gekennzeichnet, dass** die Bildsensoreinrichtung eine flächige Anordnung von Bildelementen aufweist.

4. Bildsensoreinrichtung nach Anspruch 1, **dadurch gekennzeichnet, dass** die Dünnschichtstruktur eine oder mehrere dünne Schichten von dotierten und/oder nichtdotierten amorphen Silizium enthält.

5. Bildsensoreinrichtung nach Anspruch 1, **dadurch gekennzeichnet, dass** die Dünnschichtstruktur eine oder mehrere dünne Schichten Metall enthält.

6. Bildsensoreinrichtung nach Anspruch 1, **dadurch gekennzeichnet, dass** die Dünnschichtstruktur eine oder mehrere dünne Schichten aus einem transparenten Oxid enthält.

## Claims

1. An image sensor device comprising a substrate with an integrated semiconductor structure, in particular formed in CMOS technology, and an optically active thin-layer structure produced in TFA technology disposed above the latter, said thin-layer structure comprising respectively at least one layer of doped amorphous silicon and at least one layer of undoped amorphous silicon, whereby there are formed in the horizontal plane of the image sensor device spatially neighbouring image elements which each have an optoelectronic converter for the conversion of incident light into an electrical signal, in particular an electric current, proportional to the quantity of incident light, as well as a charge accumulator assigned to the optoelectronic converter, the charging state of which charge accumulator is variable depending on the light incident on the assigned optoelectronic converter, whereby first and second limiting means for the definition of an upper and a lower charge limit-value are respectively assigned to the charge accumulator, **characterised in that** the first limiting means is a reset means (RESET), by means of which a preselectable electric voltage (Vᵣₑₛ) can be applied to the charge accumulator in the form of a condenser (C_{act}) in order to define the upper charge limit-value, and that the second limiting means is a semiconductor switch (Tᵣₑₛ), whose control connection is held at a potential slightly above the blocking voltage in such a way that the semiconductor switch (Tᵣₑₛ) transfers into the conducting state before the voltage on the condenser (C_{act}) reaches a critical value of 0 volts.

2. The image sensor device according to claim 1, **characterised in that** the image sensor device has a line of individual image elements.

3. The image sensor device according to claim 1, **characterised in that** the image sensor device has a surface-area arrangement of image elements.

4. The image sensor device according to claim 1, **characterised in that** the thin-layer structure contains one or more thin layers of doped and/or undoped amorphous silicon.

5. The image sensor device according to claim 1, **characterised in that** the thin-layer structure contains one or more thin layers of metal.

6. The image sensor device according to claim 1, **characterised in that** the thin-layer structure contains one or more thin layers of a transparent oxide.

## Revendications

1. Dispositif de détection d'image, constitué d'un substrat, formé en particulier en technologie CMOS, avec une structure de semi-conducteur intégrée et une structure à couche mince, disposée sur celle-ci, active de manière optique, fabriquée en technologie TFA, se composant respectivement d'au moins une couche en silicium amorphe dopé et d'au moins une couche en silicium amorphe non dopé, des éléments d'image, respectivement spatialement voisins, étant constitués dans le plan horizontal du dispositif de détection d'image, éléments qui présentent respectivement un convertisseur optoélectronique, pour convertir une lumière incidente en un signal électrique, proportionnel à la quantité de lumière incidente, en particulier un courant électrique, ainsi qu'un accumulateur de charges, associé au convertisseur optoélectronique, dont l'état de charge est variable en fonction de la lumière, incidence sur la surface du convertisseur optoélectronique associé, des premiers et deuxièmes moyens de limitation, pour la définition, respectivement, d'une valeur limite de charge supérieure et inférieure, étant associés à l'accumulateur de charges, **caractérisé en ce que** le premier moyen de limitation est un moyen de remise à zéro (RESET), par lequel, pour la définition de la valeur de limitation de charge supérieure, une tension électrique (Vᵣₑₛ), pouvant être prédéfinie, peut être appliquée à l'accumulateur de charges, sous forme d'un condensateur (Cᵢₙₜ) et que le deuxième moyen de limitation est un commutateur statique (Tᵣₑₛ), dont la borne de gâchette est maintenue sur un potentiel un peu au-dessus de la tension à l'état bloqué, de telle sorte que le commutateur statique (Tᵣₑₛ) passe à l'état conducteur, avant que la tension n'atteigne une valeur critique de 0 volt sur le condensateur (Cᵢₙₜ).

2. Dispositif de détection d'image selon la revendication 1, **caractérisé en ce que** le dispositif de détection d'image présente une ligne d'éléments d'image individuels.

3. Dispositif de détection d'image selon la revendication 1, **caractérisé en ce que** le dispositif de détection d'image présente un agencement plan d'éléments d'image.

4. Dispositif de détection d'image selon la revendication 1, **caractérisé en ce que** la structure à couche mince contient une ou plusieurs couches minces de silicium amorphe dopé et / ou non dopé.

5. Dispositif de détection d'image selon la revendication 1, **caractérisé en ce que** la structure à couche mince contient une ou plusieurs couches minces de métal.

6. Dispositif de détection d'image selon la revendication 1, **caractérisé en ce que** la structure à couche mince contient une ou plusieurs couches minces d'un oxyde transparent.
